**Europäisches Patentamt**

(19) **European Patent Office**

**Office européen des brevets**

(11) Veröffentlichungsnummer: **0 111 704**
**B1**

(12) **EUROPÄISCHE PATENTSCHRIFT**

(45) Veröffentlichungstag der Patentschrift:
11.06.86

(51) Int. Cl.⁴: **H 04 N 5/93, G 11 B 15/14**

(21) Anmeldenummer: **83110940.0**

(22) Anmeldetag: **03.11.83**

(54) **Videorecorder mit Aufzeichnung eines Tonträgers.**

(30) Priorität: **18.11.82 DE 3242557**
**14.05.83 DE 3317645**

(73) Patentinhaber: **TELEFUNKEN Fernseh und Rundfunk GmbH, Göttinger Chaussee 76, D-3000 Hannover 91 (DE)**

(43) Veröffentlichungstag der Anmeldung:
**27.06.84 Patentblatt 84/26**

(72) Erfinder: **Schröder, Ernst, Dipl.-Ing. Entw.-Ing., Pinkenburger Strasse 25D, D-3000 Hannover 51 (DE)**
Erfinder: **Kluth, Hans-Jürgen, Ing. grad. Entw.-Ing., Weichselstrasse 11, D-7730 VS-Villingen (DE)**
Erfinder: **Scholz, Werner, Dipl.-Ing. HF-Ing., Osterstrasse 20, D-3007 Gehrden (DE)**

(45) Bekanntmachung des Hinweises auf die Patenterteilung:
**11.06.86 Patentblatt 86/24**

(84) Benannte Vertragsstaaten:
**AT BE DE FR GB IT NL SE**

(74) Vertreter: **Einsel, Robert, Dipl.-Ing., TELEFUNKEN Fernseh und Rundfunk GmbH Göttinger Chaussee 76, D-3000 Hannover 91 (DE)**

(56) Entgegenhaltungen:
**EP - A - 0 044 687**
**EP - A - 0 061 050**
**EP - A - 0 063 737**
**DE - A - 3 110 142**
**DE - A - 3 113 862**
**FR - A - 2 501 888**
**US - A - 3 359 375**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER. STOCKHOLM 1986

**Beschreibung**

Bei Videorecordern ist es bekannt (DE-OS 31 10 968), ein oder mehrere mit Tonsignalen frequenzmodulierte Tonträger mit den Videoköpfen zusammen mit dem Bildträger auf Schrägspuren eines Magnetbandes auf zuzeichnen. Enrch diese Art der Tonauf ze ichnung wird eine höhere Tonqualität gegenüber der NF-Tonauf zeichnung auf einer Längsspur des Bandes erreicht. Der Tonträger hat z. B. eine Frequenz von 2 MHz und liegt im unteren Frequenzbereich des mit dem Videosignal frequenzmodulierten Bildträgers.

Da die Aufzeichnung abwechselnd mit zwei Videoköpfen mit einer Überlappungszeit erfolgt, ist es bei der Wiedergabe notwendig, die Wege für den frequenzmodulierten Bildträger und den Tonträger von Halbbild zu Halbbild zwischen den beiden Videoköpfen unzuschalten. Im Weg des Bildträgers stört diese Umschaltung nicht, weil während der Vertikalrücklauf zeit zwischen zwei Halbbildern ohnehin keine Bildwiedergabe erfolgt. Im Weg des Topträgers kann aber eine derartige periodische Umschaltung zu Störungen führen, weil das Tonsignal ein kontinuierliche s Signals ohne Unterbrechungen ist.

Es ist bekannt (DE-OS 31 10 968), bei der Wiedergabe die Tonträger von den beiden Vide oköpf en zu addieren und einem FM-Demodulator zuzuführen. Während der genannten Überlappungszeit sind dann die Tonträger beider Videoköpfe wirksam. Durch Toleranzeinflüsse der Videoköpfe sowie durch elastische und nichte lastische Verformungen des Bandes ergeben sich jedoch zwischen den Tonträgern der beiden Videoköpfe statistisch schwankende Phasenverschiebungen. Es kann daher während der Überlappungszeit zu einer Auslöschung der beiden Tonträger und somit zu einem Signaleinbruch kommen, der nach einer FM-Demodulation Störungen verursacht. Zur Vermeidung dieses Signaleinbruches werden bei dieser bekannten Schaltung die beiden Tonträger mit unterschiedlicher Amplitude addiert, so daß eine Kompensation nicht mehr möglich ist.

Es ist auch bekannt (DE-OS 31 16 1 30), die kombinierten Tonträger über einen selektiven Verstärker zu f ühren und de ssen Verstärkung während des Kopfwechsels so zu erhöhen, daß der Verstärker auf seiner Re sonanzfrequenz schwingt. Dadurch ist sichergestellt, daß während des Kopfwechsels inner ein Tonträger vorhanden ist, auch wenn die ser kurze Zeit nicht moduliert ist.

Es ist ferner möglich, den Tonkanal ebenso wie den Bildkanal im trägerfrequenten Weg von Halbbild zu Halbbild auf die Ausgangssignale der beiden Videoköpfe umzuschalten. Dabei kann jedoch durch die genannten statistischen Phasenverschiebungen bei der Umschaltung ein phasensprung im Weg des Tonträgers auftreten, der nach der FM-Demodulation wieder eine Störung erzeugt.

Der Erfindung liegt die Aufgabe zugrunde, eine Wiedergabeschaltung für den Tonträger mit Umschaltung im Weg des frequenzmodulierten Tonträgers zu schaffen, bei der keine Störungen im Tonsignal auftreten.

Diese Aufgabe wird durch die im Anspruch 1 beschriebene Erfindung gelöst. Vorteilhafte Weiterbildungen der Erfindung sind in den Unteransprüchen beschrieben.

Bei der Erfindung wird also bereits vor dem Umschaltzeitpunkt des Tonkanals zwischen den Videoköpfen eine phasensteuerung der Tonträger eingeleitet, derart, daß die Tonträger im Umschaltzeitpunkt gleiche Phase haben. Der am Ausgang des Umschalters auftretende Tonträger erleidet dann keinen Phasensprung, so daß auch nach der FM-Demodulation des Tonträgers keine Störung auftritt. Es werden also alle Phasenabweichungen zwischen den dem Umschalter zugeführten Tonträgern unabhängig von ihrer jeweiligen Größe und Richtung jeweils bis zum Unschaltzeitpunkt ausgeregelt.

Ausführungsbeispiele der Erfindung werden anhand der Zeichnung erläutert. Darin zeigen

Figur 1 ein Blockschaltbild einer erfindungsgemäßen Lösung,

Figur 2 Kurven zur Erläuterung der Schaltung nach Figur 1,

Figur 3 ein weiteres Ausführungsbeispiel der Erfindung,

Figur 4 Kurven zur Erläuterung der Wirkungsweise der Schaltung nach Figur 3,

Figur 5 ein detailliertes Blockschaltbild mit digitalen Bauteilen für die Schaltung nach Figur 3 und

Figur 6 Kurven zur Erläuterung der Wirkungsweise der Schaltung nach Figur 5. Dabei zeigen jeweils die kleinen Buchstaben, an welchen Punkten der Schaltbilder die Spannungen gemän den Kurvendiagrammen stehen.

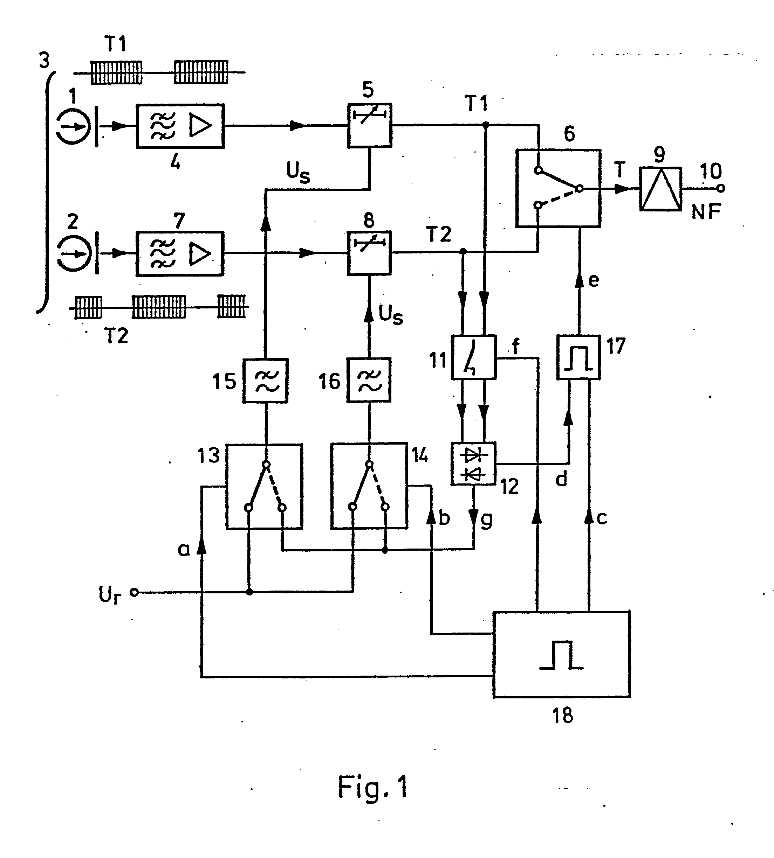

In Figur 1 werden mit den Videoköpfen 1,2 von dem Magnetband 1 von Halbbild zu Halbbild die Tonträger T1, T2 abgetastet. Die Signalwege für den ebenfalls abgetasteten Bildträger, den Farbträger und sonstige Signale sind nicht dargestellt. Der Tonträger T1 gelangt über den für die Tonträgerfrequenz selektiven Verstärker 4 und die steuerbare Verzögerungsstufe 5 auf einen Eingang des Umschalters 6. Ebenso gelangt der Tonträger T2 über den selektiven Verstärker 7 und die steuerbare Verzögerungsstufe 8 auf den anderen Eingang des Umschalters 6. Am Ausgang de s Umschalters 6 steht ein kontinuierlicher Tonträger T, der über den FM-Demodulator 9 an der Klemme 10 ein NF-Tonsignal liefert. Ferner sind dargestellt ein Tor 11, eine Phasenvergleichsstufe 12, zwei Schalter 13, 14, zwei als Integrierglieder wirkende Tiefpasse 15, 16, ein Impulsgenerator 17 und eine Steuereinheit 18.

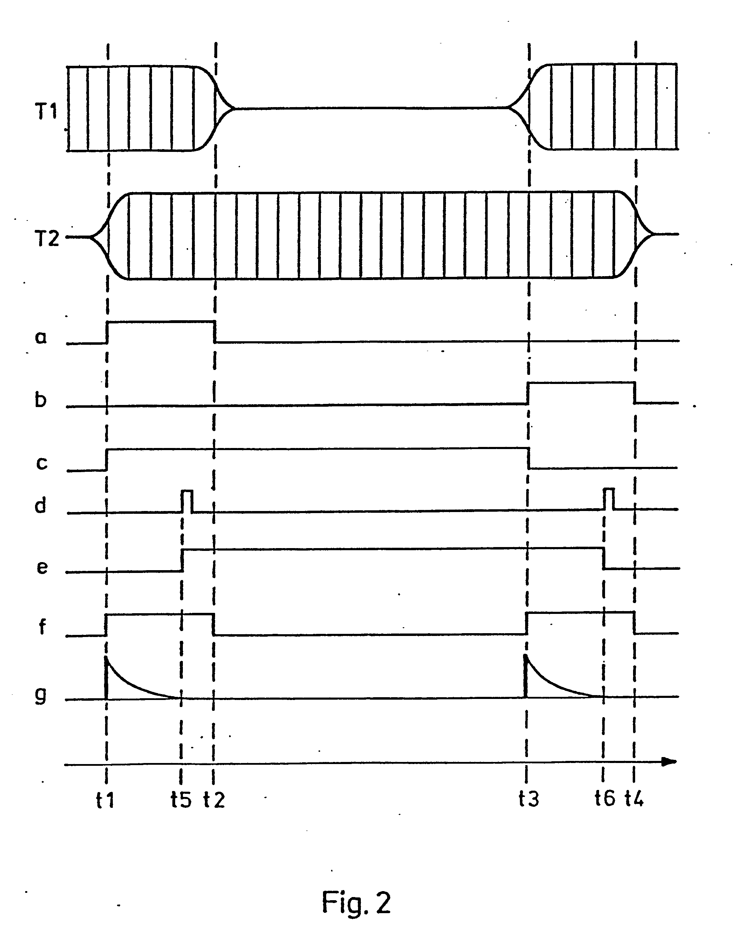

An Hand der Fig. 2 wird die Wirkungseise erläutert. In der Zeit vor t1 wird der Tonträger T1 mit dem Schalter 6 in der darge stellten Stellung durchgeschaltet. An den Steuereingang der Verzögerungsstufe 5 ist eine feste Referenzspannung Un über den Schalter 13 und den Tiefpaß 15 angelegt. Die Verzögerungzeit

der Stufe 5 ist daher konstant und beträgt etwa 2 µs. Diese konstante Verzögerungszeit bewirkt nur eine geringe Verzögerung des Tonträgers und ist während die ser Zeit ohne Bedeutung. Der Tonträger T2 vom Videokopf 2 wird während dieser Zeit mit dem Schalter 6 nicht ausgewertet. Im Zeitpunkt t1 beginnt die Abtastung des Tonträgers T2 mit dem Videokopf 2. Durch die Schaltspannung f wird das Tor 11 durchlässig gesteuert, so daß die nummehr gleichzeitig vorhandenen Tonträger T1 und T2 auf die Phasenvergleichsstufe 12 gelangen. Diese erzeugt eine von der Phasenabweichung abhängige Spannung g. Diese gelangt über den durch die Schaltspannung a im Zeitpunkt t1 in die gestrichelte Stellung ungeschalteten Umschalter 13 und über den Tiefpaß 15 als Stellgröße Us auf die Stufe 5. In Abhängigkeit von der Phasenabweichung zwischen den Tonträgern T1 und T2 an den Ausgängen der Stufen 5,8 wird die Verzögerungszeit der Stufe 5 ausgehend von ihrer Grundverzögerungszeit von 2 µs um etwa ± 0. 5 µs je nach Vorzeichen der Phasenabweichung geändert. Dadurch ändert sich die phase des Tonträgers T1 am Ausgang der Stufe 5 in dem Sinne, daß die phasen der Tonträger T1, T2 an den Ausgängen der Stufen 5, 8 in Übereinstimmung gebracht werden. Die Verzögerungszeit der Stufe 8 wird während dieser Zeit durch die über den Umschalter 14 zugef ührte Stellgröße Us konstant gehalten. Der Tiefpaß 15 sorgt dafür, daß die im Zeitpunkt t1 sprungartig je nach phasenabweichung auf tretende Spannung g nicht sprungartig als Stellgröße Us am Eingang der Stufe 5 wirksam wird. Dadurch würde nämlich im Tonträger T1 ein Phasensprung auf treten, der wiederum als Störung wirksam würde. Die Grenzfrequenz des Tiefpasses 15 bzw. die Zeitkonstante des dadurch gebildeten Integriergliedes ist nach folgenden Gesichtspunkten bemessen. Die Zeitkonstante ist so klein, daß die Stellgröße Us innerhalb der Zeit t1-t2 die phasenabweichung der Tonträger vollständig ausregeln kann. Die Zeitkonstante ist andererseits so groß daß die Änderung der Phase des Tonträgers T1 nur so langsam erfolgt, daß dadurch keine Störung im NF-Tonsignal an der Klemme 10 auftritt. An sich wird durch die Stellgröße Us die phase des Tonträgers TI durch Steuerung der Verzögerungszeit der Stufe 5 verfälscht. Diese Phasenänderung hat aber eine so geringe Frequenz, daß dadurch im NF-Tonsignal an der Klemme 10 keine Störung auftritt.

Im Zeitpunkt t5 wird in der Phasenvergleichsstufe 12 Phasengleichheit zwischen den Tonträgern T1, T2 an den Eingängen des Umschalters 6 festgestellt. Der Impuls c dient an sich zur Umschaltung des Umschalters 6 und würde die se Umschaltung bei t1 auslösen. Der Umschaltimpuls e wird aber in der Impulsstufe 17 erst dann erzeugt, wenn beide Impulse c und d auftreten. In Zeitpunkt t5 wird somit der Umschaltimpulse für den Umschalter 6 erzeugt, der den Umschalter 6 in die ge strichelte Stellung umschaltet. In diesem Zeitpunkt haben die Tonträger T1, T2 an den Eingängen des Umschalters 6 gleiche Phase, so daß im Tonträger T am Ausgang des Umschalters 6 kein phasensprung und somit im NF-Signal an der Klemme 10 keine Störung auftritt. Beginnend vom Zeitpunkt t5 wird somit jetzt der Tonträger T2 mit dem Umschalter 6 durchgeschaltet. Die Stellgröße Us für die Stufe 8 ist durch die dargestellte Stellung des Unschalters 14 durch die kons tante Referenzspannung Ur bestimmt, so daß nunmehr die Verzögerungszeit der Stufe 8 konstant ist. Die Stufe 5 hat jetzt keine Wirkung, weil der Tonträger T1 nicht ausgewertet wird. Die Stellgröße Us kann sich nummehr während der Zeit t2-t3 wieder auf den Wert von Ur einstellen, weil der Umschalter 13 im Zeitpunkt t2 wieder in die dargestellte Stellung umgelegt ist.

Im Zeitpunkt t3 erfolgt dieser Vorgang in umgekehrter Richtung. Der Impuls b schaltet jetzt den Eingang des Integriergliedes 16 auf den Ausgang der Phasenvergleichsstufe 12, so daß nunmehr die Verzögerungszeit der Stufe 8 auf gleiche phase von T1 und T2 geregelt wird, während die Verzögerungszeit der Stufe 5 konstant bleibt. Im Zeitpunkt t6 sei wieder phasengleichheit erreicht. Die Impulse d und c erzeugen dann zusammen die Flanke des Impulses e, wodurch der Umschalter 6 wieder in die obere Stellung umgelegt wird.

Die Steuereinheit 18 erzeugt die Impulse f und c, die zeitlich die Überlappungszeiträume t1-t2 und t3-t4 bei der Abtastung der Tonträger andeuten. Diese Impulse werden von einem die Videoköpfe 1, 2 tragenden Kopfrad abgeleitet. Dieses enthält einen Impulsgeber, der Ansteuerimpulse an die Steuereinheit 18 liefert.

Bei einem Tonträger mit einer Frequenz von 2 MHz kann durch Toleranzen und Bandverformungen die phasenabweichung zwischen T1 und T2 größer als 90° sein. Deshalb kann es zweckmäßig sein, für die Phasenmessung in der Phasenvergleichsstufe 12 nicht den Tonträger selbst auszuwerten, sondern einen zusätzlich aufgezeichneten Pilotträger, z. B. mit einer Frequenz von 50 kHz. Für den Pilotträger wird vorzugsweise eine Frequenz gewählt, die kleiner ist als die Frequenz des Tonträgers, da sonst Mehrdeutigkeiten hinsichtlich der Regelung der phase des Tonträgers auftreten können. Wenn zwei abgetastete Pilotträger einer geringen Frequenz in der Phase übereinstimmen, müssen zwangsläufig auch die gleichzeitig aufge-zeichneten Tottträger höherer Frequenz in der phase übereinstimmen. Als Pilotträger kann auch ein zusätzlich aufgezeichneter Farbträger von z. B. 625 kHz ausgewertet werden. Der phasenvergleich von t1-t5 und t3-t6 während des Überlappungsbereiches der beiden Tonträger T1, T2 erfolgt während einer Zeit, während der keine Bildwiedergabe stattfindet. Deshab kann ein Pilotträger oder ein Farbträger während dieser Zeit mit erhöter Amplitude aufgezeichnet werden, we il er eine Störung des wiedergegebenen Bildes nicht verursachen kann.

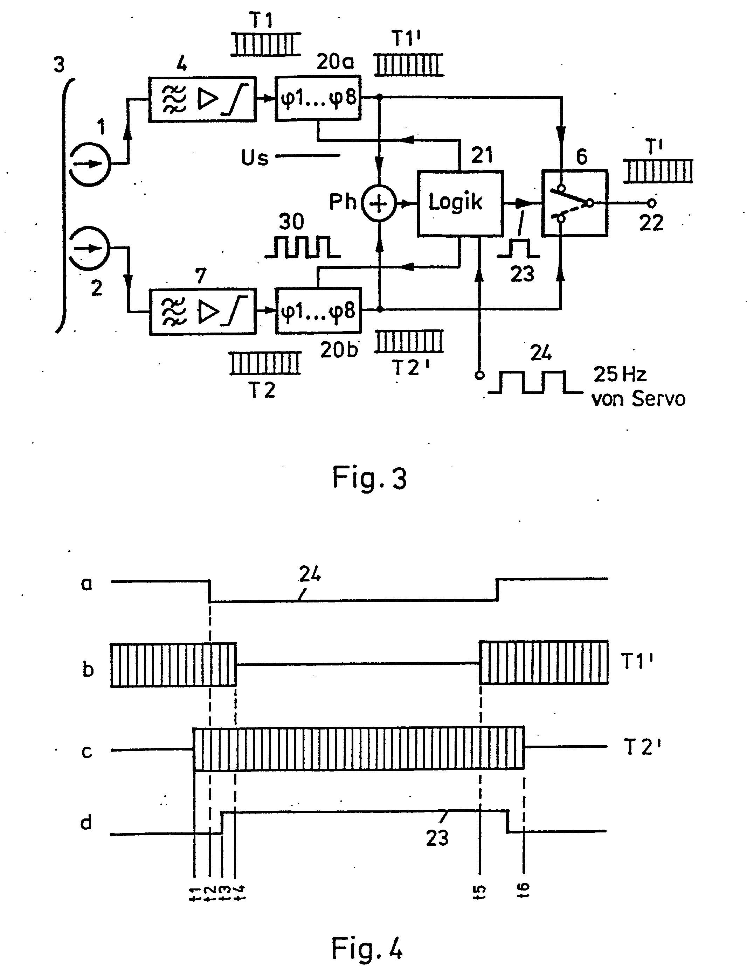

Bei einer Weiterbildung der Erfindung gemäß den Figuren 3-6 wird der Tonträger der beginnenden Spur, auf den während der Überlappungszeit umgeschaltet werden soll, unabhangig von seiner jeweiligen Phase zyklisch nacheinander während der Überlappungszeit mit verschiedenen Phasendrehungen zur Verfügung gestellt. Mit einer Überwachungsschaltung wird ständig das Phasenverhältnis zwischen dem jeweils ausgewerteten Tonträger der zuendegehenden Spur und dem Tonträger geprüft, auf den die Umschaltung erfolgen soll. Wenn der Phasendreher den Tonträger mit verschiedenen Phasenlagen ausreichend kleinen Ahstandes und ausreichend großer Zahl zur Verfügung stellt, tritt irgendwann eine ausreichende Phasenübereinstimmung zwischen den beiden Tonträgern auf. Sobald diese festgestellt wird, wird die Umschaltung des Tonkanals zwischen den beiden Videoköpfen ausgelöst.

Durch diese Schaltung wird ein phasenangleichbereich von 360° geschaffen. In vorteilhafter Weise tritt keine Frequenzänderung des Ausgangssignals auf, so daß das Tonsignal nicht verfälscht wird. Es ist auch nicht erforderlich, für die Herstellung der Phasenübereinstimmung eine analoge Regelspannung zu erzeugen, so daß auch für eine derartige Regelspannung notwendige Tiefpässe vermieden werden. Die Phasendreher müssen zwischen den Kopfwechseln nicht in eine definierte Ausgangsstellung zurückgestellt werden. Die Schaltung kann insbesondere als Digitalschaltung aufgebaut werden und ist daher leicht integrierbar.

Diese Lösung wird anhand der Figuren 3-6 beschrieben.

Figur 3 zeigt ein Video-Magnetband 3, von dessen Schrägspuren die Signale abwechselnd mit zwei Videoköpfen 1 und 2 abgetastet werden. Auf dem Magnetband 3 ist unter anderem ein frequenzmodulierter Tonträger aufgezeichnet, der durch die Schaltung ausgewertet werden soll. Die Auswertung weiterer aufgezeichneter Signale wie frequenzmodulierter Bildträger und dergleichen wird zur Vereinfachung nicht näher behandelt. Der Tonträger T1 gelangt von dem ersten Videokopf 1 über den selektiven, begrenzenden Verstärker 5 und den auf acht verschiedene Werte φ 1-φ 8 umschaltbaren Phasendreher 20a auf den Umschalter 6. Der Tonträger T2 vom Videokopf 2 gelangt entsprechend über den selektiven, begrenzenden Verstärker 7 und den Phasendreher 20b auf den anderen Eingang des Umschalters 6. Die Stufen 4 und 7 sowie 20a und 20b sind identisch.

Die Wirkungsweise dieser Schaltung wird im Zusammenhang mit der Figur 4 erläutert. Die Logik 21 wird von dem 25 Hz-Impuls 24, der von der Servoschaltung des Recorders kommt, gesteuert. Die Logik 21 liefert an den Phasendreher 20a eine konstante Stellgröße Us, die die Phasendrehung des Phasendrehers 20a auf einem seiner Werte festhält. Der Tonträger T1' unterscheidet sich von dem Tonträger T1 daher nur durch eine konstante Phasendrehung, die für die weitere Betrachtung nicht wesentlich ist. Der Tonträger T1' gelangt auf die Phasenvergleichsstufe Ph. Im Zeitpunkt t1 (Fig. 4) befindet sich der Umschalter 6 noch in der dargestellten Stellung, so daß an der Klemme 22 noch der Tonträger T1' steht. Während des Überlappungszeitraumes t1-t4 erscheint der Impuls 24 mit seiner negativ en Flanke und bereitet die Umschaltung des Umschalters 6 vor, ohne diese jedoch auszulösen. Der Impuls 24 legt im wesentlichen fest, in welche Richtung die bevorstehende Umschaltung zu erfolgen hat. Beginnend vom Zeitpunkt t2 gelangt von der Logik 21 die Umschaltspannung 30 auf den Steuereingang des Phasendrehers 20b und bewirkt zyklisch eine Anderung der Phasendrehung in Schritten von 45°, insgesamt über 360°, der Periodendauer des Tonträgers T. Der derart in der Phase umgeschaltete Tonträger T2' gelangt ebenfalls auf die Phasenvergleichsstufe Ph. Durch die konstante Phase des Tonträgers T1' und die sich in Stufen ändernde Phase des Tonträgers T2' wird während des Überlappungszeitraumes t1-t4 in der Phasenvergleichsstufe Ph eine ausreichende Phasenübereinstimmung von T1' und T2' festgestellt. In diesem Zeitpunkt t3 wird von der Phasenvergleichsstufe Ph die Logik 21 angesteuert. Diese erzeugt daraufhin den Umschaltimpuls 23 gemäß Figur 4d, der die Umschaltung des Umschalters 6 in die gestrichelte Stellung auslöst, so daß nun der Tonträger T2' zur Klemme 22 gelangt. Da in diesem Zeitpunkt weitestgehend Phasengleichheit zwischen T1' und T2' besteht, entsteht in dem Tonträger T' an der Klemme 22 bei der Umschaltung im Zeitpunkt t3 kein störender Phasensprung.

Bei der nächsten Umschaltung von T2' auf T1' während des folgenden Überlappungszeitraumes t5-t6 sind die Phasendreher 20a und 20b in ihrer Funktion vertauscht. Dann wird der Phasendreher 20b mit der konstanten Stellgröße Us und der Phasendreher 20a mit der Umschaltspannung 30 gesteuert.

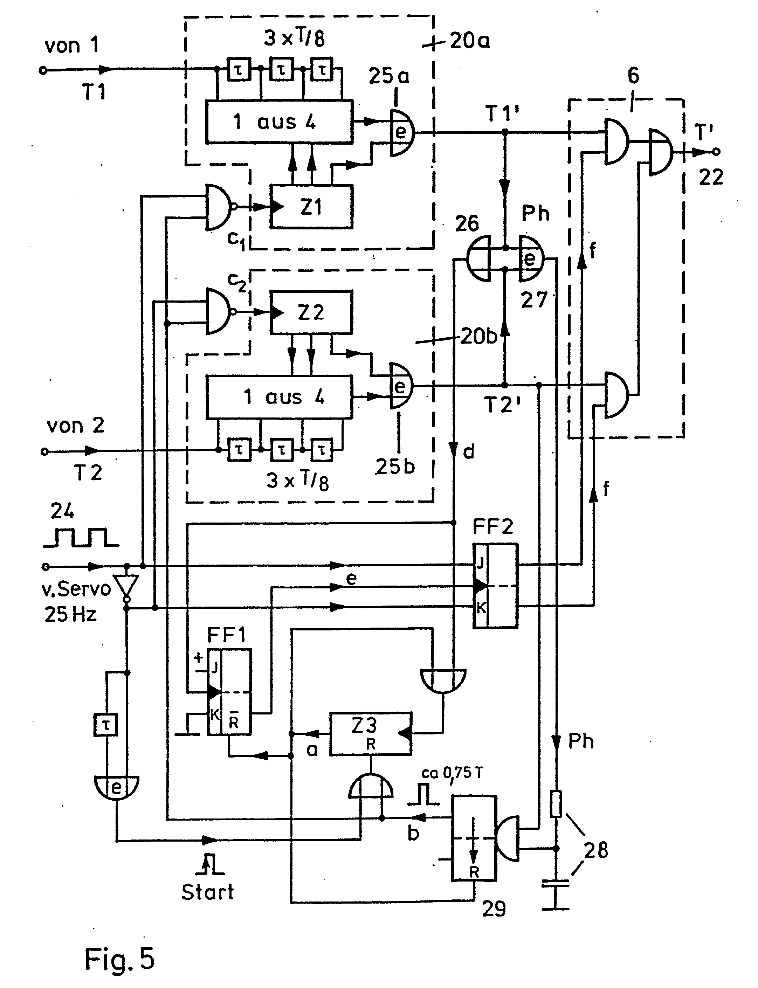

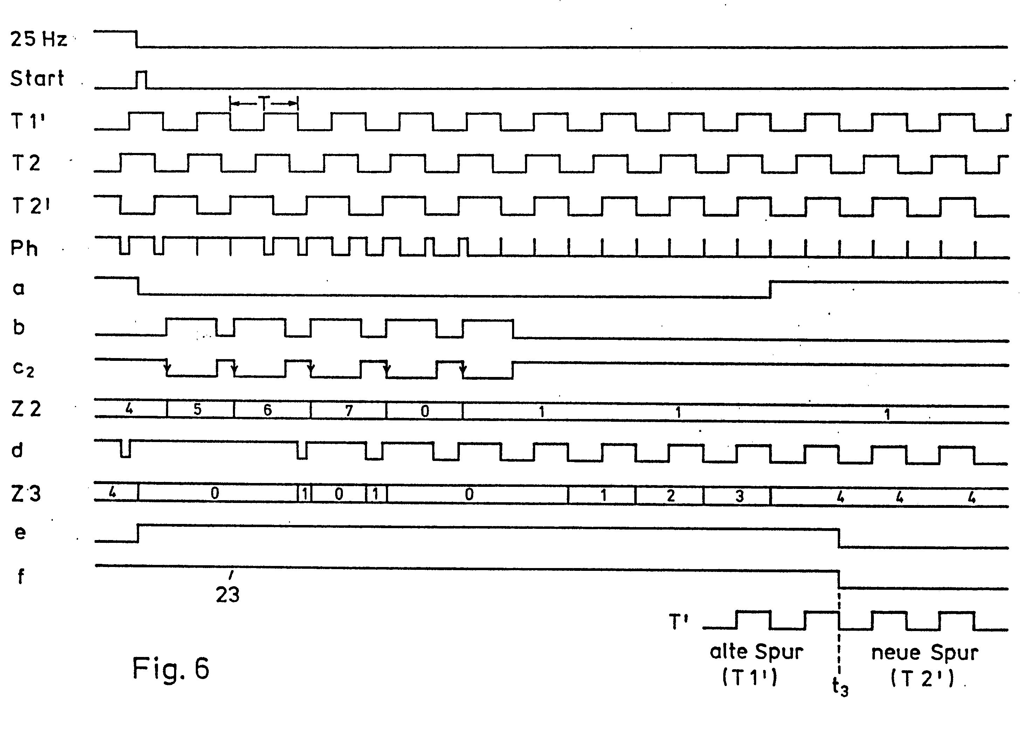

In Figur 5 ist durch die Bezugsziffern aus Figur 3 angedeutet, welche Teile in den Figuren 3 und 5 einander entsprechen. Die Wirkungsweise wird zusammen mit der Figur 6 erläutert, und zwar ebenfalls für die Umschaltung von dem Videokopf 1 auf den Videokopf 2. Die Buchstaben a-f zeigen, an welchen Punkten in Figur 5 die Spannungen gemäß Figur 6 stehen.

In der Schaltung nach Figur 5 enthalten die Phasendreher 20a und 20b je ein Laufzeitglied mit vier Abgriffen. Die Phasenverschiebung zwischen aufeinanderfolgenden Abgriffen beträgt ca. 45°. Über eine Auswahlschaltung wird das Signal von einem der Abgriffe einem EX-OR-Gatter 25a bzw. 25b zugeführt, das als ein- und ausschaltbarer Inverter wirkt. Mit Hilfe der drei Ausgangssignale eines 3-Bit-Zählers Z1 bzw. Z2 werden die Auswahlschaltungen und die Gatter 25a und 25b so gesteuert, daß mit einem Zählzyklus des Zählers acht verschiedene Phasendrehungen erzeugt werden, die sich jeweils um ca. 45° unterscheiden. Je nach Anschluß des Zählers konnen die Phaseneinstellungen in ansteigender, abfallender oder nicht monotoner Folge ablaufen. Die Anzahl der Abgriffe der Laufzeitkette kann auch erhöht und der Zählzyklus entsprechend vergrößert werden. Die Laufzeiten zwischen den Abgriffen sind so gewählt, daß sich die einstellbaren Phasendrehungen etwa gleichmäßig über den Bereich von 360° verteilen.

Zu Beginn der Überlappungszeit t1-t4 befindet sich der Phasendreher 20a noch in der Stellung, die für die vorangehende Signalumschaltung eingestellt wurde. In dieser Stellung verbleibt der Phasendreher auch mindestens bis zur nächsten Umschaltung. Der Phasendreher 20b kann sich in einer beliebigen Stellung befinden. Die Phase zwischen den Signalen T1' und T2' ist abhängig von mechanischen Abweichungen der Spurlänge und des Kopfraddurchmessers gegenüber der Aufzeichnung und von den Einstellungen der beiden Phasendreher. Die Phasenvergleichsstufe Ph besteht aus dem EX-OR-Gatter 27. Sofern die Phasen der beiden Signale T1' und T2' nahezu übereinstimmen, gibt das Gatter 27 keine oder nur sehr schmale positive Impulse (Ph in Fig. 6) über das RC-Glied 28 auf den Eingang des Monoflops 29. Das RC-Glied 28 bewirkt, daß dieser Eingang des Monoflops 29 dann auf "0" bleibt, so daß das Monoflop 29 nicht getriggert werden kann.

Solange die positiven Impulse Ph eine bestimmte Breite überschreiten, wird das Monoflop 29 auf jeden Fall im Abstand von ca. einer Periodendauer des Signals T getriggert. Die Schaltung muß so aufgebaut sein, daß dieses gewährleistet ist. Das Monoflop 29 gibt jedesmal einen Impuls b (Fig. 6) von ca. 75% der Periodendauer ab. Dieser Impuls schaltet den Phaseneinstellungszähler Z1 bzw. Z2 für das Signal der neuen Spur jeweils um einen Schritt weiter. Gleichzeitig wird ein weiterer Zähler Z3 auf "0" gesetzt.

Bei genügender Phasenübereinstimmung von T1' und T2' bleiben die Impulse b am Ausgang des Monoflops 29 aus. Die Phasendrehung bleibt dann unverändert. Der Zähler Z3 zählt die Perioden des T-Signals. Bei einem vorgegebenen Wert von Perioden, z.B. 4 oder 8, geht der Ausgang des Zählers Z3 auf "1". Hierdurch wird die eigentliche Signalumschaltung mit dem Schalter 6 eingeleitet und dafür gesorgt, daß bis zum nächsten Kopfwechsel alle Einstellungen unverändert bleiben. Der Zähler Z3 verhindert, daß durch eine Signalstörung eine Signalumschaltung mit dem Schalter 6 ausgelöst wird. Es besteht nämlich die Möglichkeit, daß durch die Störung eine kurzzeitige Phasenübereinstimmung an den Eingängen der Phasenvergleichsstufe Ph vorgetäuscht wird, die die Umschaltung des Umschalters 6 auslöst.

Die Zeitkonstante des RC-Gliedes 28 und der Endwert des Zählers Z3 sind so aufeinander abgestimmt, daß die Betätigung des Umschalters 6 nach Phasenangleichung von T1' und T2' mit ausreichender Sicherheit innerhalb der Überlappungszeit t1-t4 bzw. t5-t6 erfolgt. Zusätzlich können Mittel vorgesehen sein, die kurz vor Ende der Überlappungszeit eine Zwangsumschaltung des Umschalters 6 bewirken, wenn die Umschaltung durch die Phasenvergleichsstufe Ph nicht ausgelöst wurde. Die Umschaltung muß dann auf jeden Fall erfolgen, weil am Ende der Überlappungszeit t1-t4 ohne Umschaltung das Signal ausfallen würde.

Anhand der Figur 6 werden noch einige Schaltungseinzelheiten der Figur 5 erörtert.

Die Pegelübergänge der mit der Kopfraddrehung synchronen Impulse 24 sollten in der ersten Hälfte der Überlappungszeit t1-t4 liegen. Jeder Pegelübergang dieser Impulsfolge erzeugt einen Startimpuls gemäß Figur 6, der den Zähler Z3 auf "0" setzt (Spannung a in Fig. 6). Durch die Impulse 24 wird außerdem dafür gesorgt, daß das Flip-Flop FF2 mit richtiger Phase schaltet (Spannung f), und daß immer nur der Phaseneinstellungszähler Z1 oder Z2 weitergeschaltet werden kann, der das signal der neuen Spur an das Signal der vorangehenden Spur anpassen muß (Spannung c1 oder c2). Solange die Spannung a in Fig. 6 auf "0" ist, ist die Phasenangleichsschaltung aktiv. In dieser Zeit ist das Monoflop 29 triggerbar, der Zähler Z3 erhält Zählimpulse d, und das Flip-Flop FF1 ist zurückgesetzt, so daß die Spannung e "1" ist. Die Ausgangsstellung für den Phasenangleichzähler Z2 ist im Beispiel der Fig. 5 "4". In dieser Stellung erfolgt lediglich eine Invertierung des Signals T2 über das EX-OR-Gatter 25. Beim Weiterzählen wird dann die Phase von T2' je Stufe um 45° weitergedreht. Bei Zählerstellung "1" ist schließlich die günstigste Phaseneinstellung erreicht. Durch Phasenschwankungen kann in dieser Stellung ein Impuls am Ausgang des Monoflops 29 entstehen, bevor der Zähler Z3 seinen Endstand erreicht hat. In diesem Fall muß ein erneuter Phasenangleichzyklus durchlaufen werden.

Nachdem die Spannung a auf "1" gegangen ist, kann das Monoflop 29 nicht mehr getriggert werden, und der Zähler Z3 muß bis zum nächsten Start-Impuls seine Stellung beibehalten. Das Flip-Flop FFI wird mit dem nächsten Impuls d umgeschaltet. Die dadurch entstehende abfallende Flanke der Spannung e bewirkt über das Flip-Flop FF2 die eigentliche Signalumschaltung mit dem Umschalter 6. Ohne diese Umschaltverzögerung könnte etwa gleichzeitig mit der Umschaltung des Flip-Flop FF2 noch ein Impuls am Ausgang des Monoflops 29 ausgelöst werden, der dann erneut die Phasenangleichschaltung aktiviert. Dies könnte erhebliche Störungen verursachen. Das OR-Gatter 26 bewirkt, daß die Umschaltung mit dem Umschalter 6 erst dann erfolgt, wenn T1' und T2' auf "0" sind. Bei dem hier verwendeten Umschalter kann zu diesem Zeitpunkt die Umschaltung keinen störenden Schaltimpuls verursachen. Beim nächsten Kopfwechsel, also der ansteigenden Flanke der Impulse 24, läuft der Phasenangleich- und Umschaltvorgang in entsprechender Weise ab.

Die Frequenz der Umschaltimpulse 30 (Spannung c2 in Fig. 6) ist etwa gleich der FM-Trägerfrequenz. Bei einer Frequenz des Tonträgers von 2 MHz können also während einer Überlappungszeit von 1 ms nahezu 2000 Phaseneinstellungen geprüft werden bzw. ein Einstellzyklus von 8 bzw. 16 verschiedenen Phasendrehungen kann ca. 100 bzw. 50 mal durchlaufen werden. Verzögerungen der Umschaltimpulse 30 treten allerdings auf, wenn die Phasenübereinstimmung bereits gut ist und Monoflop 29 nicht sofort zu Beginn der Zählzeit des Zählers getriggert wird.

Die verhältnismäßig große Überlappungszeit ist auf jeden Fall ausreichend um - selbst bei Störungen - mit großer Sicherheit einen günstigen Zeitpunkt für die Umschaltung zu finden.

**Patentansprüche**

1. Videorecorder mit Aufzeichnung eines Tonträgers (T), der mit einer Überlappungszeit abwechselnd von zwei Videoköpfen (1,2) von einem Magnetband (3) abgetastet wird, mit einem Umschalter (6), der den den Tonträger (T) führenden Tonkanal während der Überlappungszeit (t1-t2, t3-t4) zwischen den beiden Videoköpfen (1,2) umschaltet, dadurch gekennzeichnet, daß das Phasenverhältnis zwischen den den Eingängen des Umschalters (6) zugeführten Tonträgern (T1, T2) während der Überlappungszeit (t1-t2, t3-t4) durch eine Stellgröße (Us) so gesteuert ist, daß die beiden Tonträger (T1,T2) im Umschaltzeitpunkt (t5, t6) etwa gleiche Phase haben.

2. Recorder nach Anspruch 1, dadurch gekennzeichnet, daß in den Wegen der beiden Tonträger (T1, T2) je eine steuerbare Verzögerungsstufe (5,8) liegt.

3. Recorder nach Anspruch 2, dadurch gekennzeichnet, daß die Stellgröße (Us) in einer an die Ausgänge der Verzögerungsstufe (5,8) angeschlossenen Phasenvergleichsstufe (12) gewonnen ist.

4. Recorder nach Anspruch 2, dadurch gekennzeichet, daß die Verzögerungszeiten der Verzögerungsstufen (5,8) außerhalb der Überlappungszeiten (t1-t2, t3-t4) auf feste Werte gesteuert sind.

5. Recorder nach Anspruch 1, dadurch gekennzeichnet, daß die Phase desjenigen Tonträgers (T1,T2) gesteuert wird, dessen Abtastung am Ende der Überlappungszeit (t1-t2, t3-t4) endet.

6. Recorder nach Anspruch 1, dadurch gekennzeichnet, daß der Unschalter (6) jeweils beim Erreichen von Phasengleichheit zwischen den beiden Tonträgern (T1, T2) betätigt wird.

7. Recorder nach Anspruch 1, dadurch gekennzeichnet, daß die Stellgröße (Us) über ein Integrierglied (15,16) geführt ist.

8. Recorder nach Anspruch 1, dadurch gekennzeichnet, daß die Stellgröße (Us) durch Phasenvergleich aus einem zusätzlich aufgezeichneten Pilottrager gewonnen ist.

9. Recorder nach Anspruch 8, dadurch gekennzeichnet, daß die Frequenz des Pilotträgers kleiner ist als die Frequenz des Tonträgers (T).

10. Recorder nach Anspruch 8 oder 9, dadurch gekennzeichnet, daß als Pilotträger ein aufgezeichneter Farbträger ausgenutzt ist.

11. Recorder nach Anspruch 8, dadurch gekennzeichnet, daß der Pilotträger jeweils während der Überlappungszeit (t1-t2, t3-t4) mit vergrößerter Amplitude aufgezeichnet ist.

12. Recorder nach Anspruch 1 dadurch gekennzeichnet, daß während der Überlappungszeit (t1-t4) der Tonträger (T2) vom zweiten Kopf (2) über einen zyklisch auf verschiedene diskrete Werte (φ 1-φ8) umgeschalteten Phasendreher (20b) geführt und zusammen mit dem Tonträger (T1) vom ersten Kopf (1) einer Phasenvergleichsstufe (ph) zugeführt ist, deren Ausgangsspannung bei ausreichender Phasengleichheit der zugeführten Tonträger die Weiterschaltung des Phasendrehers (20b) stoppt und die Betätigung des Umschalters (6) auslöst(Fig. 3).

13. Recorder nach Anspruch 12, dadurch gekennzeichnet, daß die Werte des Phasendrehers (20) sich über einen Bereich von etwa 360° der Tonträgerperiode (T) erstrecken (Fig. 3).

14. Recorder nach Anspruch 22, dadurch gekennzeichnet, daß die verschiedenen Werte (φ 2- φ 8) des Phasendrehers (20) einen Abstand von ca. 45° für die Tonträgerperiode (T) haben (Fig. 3).

15. Recorder nach Anspruch 12 oder 13, dadurch gekennzeichnet, daß der Phasendreher (20) ein Laufzeitglied mit n Abgriffen enthält, die zyklisch nacheinander mit dem Eingang eines zyklisch ein- und ausgeschalteten Inverters (25) verbunden sind, so daß dieser am Ausgang den Tonträger (T) nacheinander mit 2n verschiedenen Phasenlagen liefert (Fig. 5).

16. Recorder nach Anspruch 12, dadurch gekennzeichnet, daß die Phasenvergleichsstufe (Ph) durch ein EX-OR-Gatter (27) gebildet ist (Fig.5).

17. Recorder nach Anspruch 22, dadurch gekennzeichnet, daß Verzögerungsmittel (Z3,FF1) vorgesehen sind, die bewirken, daß die Betätigung des Umschalters (6) erst dann erfolgt, wenn sichergestellt ist, daß die Phasenübereinstimmung nicht durch eine kurzzeitige Störung vorgetäuscht wurde.

18. Recorder nach Anspruch 27, dadurch gekennzeichnet, daß der Phaseneinstellzyklus vor Betätigung des Umschalters (6) mehrmals durchlaufen werden kann.

19. Recorder nach Anspruch 12, dadurch gekennzeichnet, daß kurz vor Ende der Überlappungszeit (t1-t4) eine Zwangsauslösung des Umschalters (6) erfolgt, wenn die Phasenvergleichsstufe (Ph) keine Umschaltung ausgelöst hat.

## Claims

1. Video recorder having recording of a sound carrier (T), which is extracted alternately from a magnetic tape by two video heads (1,2) having an overlap time, having a switch (6) which switches the sound channel conveying the sound carrier (T) between the two video heads (1,2) during the overlap time (t1-t2, t3-t4), characterized in that the phase relationship between the sound carriers (T1, T2) conveyed to the inputs of the switch (6) during the overlap time (t1-t2, t3-t4) is so adjusted by a control magnitude (Us) that the two sound carriers (T1, T2) have substantially equal phases at the switching instants (t5, t6).

2. Recorder according to Claim 1, characterized in that a respective adjustable delay stage (5,8) is disposed in the paths of the two sound carriers (T1,T2).

3. Recorder according to Claim 2, characterized in that the control magnitude (Us) is obtained in a phase equalisation stage connected to the output of the delay stage.

4. Recorder according to Claim 2, characterized in that the delay times of the delay stages are set to fixed values outside the overlap times (t1-t2, t3-t4).

5. Recorder according to Claim 1, characterized in that the phase is adjusted of the particular sound carrier (T1,T2) of which the extraction ends at the end of the overlap time (t1-t2, t3-t4).

6. Recorder according to Claim 1, characterized in that the switch (6) is activated upon the attainment of phase equality between the two sound carriers (T1,T2).

7. Recorder according to Claim 1, characterized in that the control magnitude (Us) is conveyed over an integrating limb (15,16).

8. Recorder according to Claim 1, characterized in that the control magnitude (Us) is obtained by phase comparison from an additional recorded pilot carrier.

9. Recorder according to Claim 1, characterized in that the frequency of the pilot carrier is less than the frequency of the sound carrier (T).

10. Recorder according to Claim 8 or 9, characterized in that a recorded colour carrier is used as pilot carrier.

11. Recorder according to Claim 8, characterized in that the pilot carrier is recorded each time during the overlap time (t1-t2, t3-t4) with increased amplitude.

12. Recorder according to Claim 1, characterized in that the sound carrier (T2) from the second head (2) is conveyed during the overlap time (t1-t4) over a phase shifter (20b) which is switched cyclically to different discrete values ($\varphi$1-$\varphi$8) and together with the sound carrier (T1) from the first head (1) is conveyed to a phase comparison stage,(ph) the output voltage of which, upon sufficient phase equality of the applied sound carriers, stops the sequential switching of the phase shifter (20b) and initiates the operation of the switch (6).

13. Recorder according to Claim 12, characterized in that the values of the phase shifter (20) extend over a range of about 360° of the period of the sound carrier (T)(Fig.3).

14. Recorder according to Claim 12, characterized in that the different values ($\Phi$1-$\Phi$8) of the phase shifter (20) have a separation of about 45° for the period of the sound carrier (T) (Fig. 3).

15. Recorder according to Claim 12 or 13, characterized in that the phase shifter (20) contains a transit time limb having n tappings which are connected cyclically one after another with the input of an inverter (25) which is switched in and out cyclically so that this supplies successively at the output the sound carrier (T) with 2n phase positions (Fig. 5).

16. Recorder according to Claim 12, characterized in that the phase comparison stage (Ph) is formed by means of an EX-OR-gate (27) (Fig. 5).

17. Recorder according to Claim 12, characterized in that delay means (Z3, FF1) are provided which operate in such a way that the activation of the switch (6) only occurs if it is established that the phase agreement has not been upset by a transient disturbance.

18. Recorder according to Claim 17, characterized in that the phase adjustment cycle can be run through several times before activation of the switch (6).

19. Recorder according to Claim 12, characterized in that a forced release of the switch (6) occurs shortly before the end of the overlap time (t1-t4), if the phase comparison stage (ph) has not initiated a switch over.

## Revendications

1. Magnétoscope avec enregistrement d'une porteuse son (T) qui est lue sur une bande magnétique (3) avec un temps de chevauchement, alternativement par deux têtes vidéo (1, 2), comportant un commutateur (6), qui com mute le canal son, transmettant la porteuse son (T) pendant le temps de chevauchement (t1-t2,t3-t4) entreles deux têtes vidéo (1,2), caractéris en ce que le rapport de phasès entre les porteuses son (T1, T2) appliquées aux entrées du commutateur (6) est commandé pendant le temps de chevauchement (t1-t2,t3-t4) par une grandeur d'actionnement (Us) detelie sorte que les deux porteuses son (Tl'T2) aient à peu près la même phase à l'instant de commutation (t5,t6).

2. Magnétoscope selon la revendication 1, caractérisé en ce qu'il est prévu un étage de retard (5,7) pouvant être commandé dans les voies des deux porteuses son (TI,T2).

3. Magnétoscope selon la revendication 2, caractérisé en ce que la grandeur d'actionnement (Us) est obtenue dans un étage de comparaison de phases (12) relié aux sorties de l'étage de retard (5, 8).

4. Magnétoscope selon la revendication 2, caractérisé en ce que les temps de retard des étages de retard (5, 8) sont forcés, en dehors des temps de chevauchement (t1-t2, (t3-t4), à des valeurs fixes.

5. Magnétoscope selon la revendication 1, caractérisé en ce qu'on commande la phase de la porteuse son (TI, T2) dont la lecture se termine à la fin du temps de chevauchement (t1-t2,t3-t4).

6. Magnétoscope selon la revendication 1, caractérisé en ce que le commutateur (6) est actionné à chaque fois lorsqu'une égalite de phases est atteinte entre les deux porteuses son (TI'T2).

7. Magnétoscope selon la revendication 1, caractérisé en ce que la grandeur d'actionnement (Us) passe par un organe intégrateur (15,16).

8. Magnétoscope selon la revendication 1, caractérisé en ce que la grandeur d'actionnement (Us) est obtenue par comparaison de phases avec une porteuse pilote enregistrée additionnelilement.

9. Magnétoscope selon la revendication 8, caracrérisé en ce que la fréquence de la porteuse pilote est inférieure à la fréquence de la porteuse son (T).

10. Magnétoscope selon la revendication 8 ou 9, caractérisé en ce qu'on utilise comme porteuse pilote une porteuse couleur enregistrée.

11. Magnétoscope selon la revendication 8, caractérisé en ce que la porteuse pilote est enregistrée à chaque fois pendant le temps de chevauchement (t1-t2,t3-t4) avec une amplitude augmentée.

12. Magnétoscope selon la revendication 1, caractérisé en ce que, pendant le temps de chevauchement (t1-t4), la porteuse son (T2) provenant de la seconde tête (2) passe dans un élément de rotation de phase (20b) commuté cycliquement à différentes valeurs discrètes ($\varphi 1 - \varphi 8$) et est transmise en même temps que la porteuse son (T1) de la première tête (1) à un étage de comparaison de phases (Ph), dont la tension de sortie assure, dans le cas d'une identité de phases suffisante de la porteuse son introduite, l'arrêt du fonctionnement de l'élément de rotation de phase (20b) et déclenche l'actionnement du commutateur (6) (figure 3).

13. Magnétoscope selon la revendication 12, caractérisé en ce que les valeurs de l'élément de rotation de phase (20) couvrent une zone d'environ 360° de la période de porteuse son (T) (figure 3).

14. Magnétoscope selon la revendication 12, caractérisé en ce que les différentes valeurs ($\varphi 1 - \varphi 8$) de l'élément de rotation de phase (20) ont un espacement d'environ 45° pour la période de porteuse son (T) (figure 3).

15. Magnétoscope selon la revendication 12 ou 13, caractérisé en ce que l'élément de rotation de phase (20) comporte un organe de retard possédant n prises, qui sont reliées cycliquement l'une après l'autre à l'entrée d'un inverseur (25) enclenché et arrêté cycliquement, de manière que celui-ci fournisse successivement à sa sortie les porteuses son (T) avec 2n positions de phases différentes (figure 5).

16. Magnétoscope selon la revendication 12, caractérisé en ce que l'étage de comparaison de phases (Ph) est constitué par une porte OU-exclusif (27).

17. Magnétoscope selon la revendication I2,caractérisé en ce qu'il est prévu des moyens de retard (Z3, FF1), qui font en sorte que l'actionnement du commutateur (6) s'effectue seulement lorsqu'on est assuré que la concordance de phases n'a pas été altérée par une perturbation de courte durée.

18. Magnétoscope selon la revendication I7, caractérisé en ce que le cycle de réglage de phases peut être effectué plusieurs fois avant l'actionnementdu com mutateur(6).

19. Magnétoscope selon la revendication 12, caractérisé en ce que, peu avant la fin du temps de chevauchement (t1-t4), il se produit un déclenchement automatique du commutateur (6) lorsque l'étage de comparaison de phases (Ph) n'a déclenché aucune commutation.

Fig. 1

**0 111 704**

Fig. 2

3

Fig. 3

Fig. 4

Fig. 5

Fig. 6

0111704